# FASCICULE DE BREVET EUROPEEN

(11) **EP 1 921 325 B1**
(45) Date de publication et mention de la délivrance du brevet: **13.08.2014**
(21) Numéro de dépôt: 07120360.8
(22) Date de dépôt: 09.11.2007
(51) Int. Cl.: F04D 29/36, B64C 11/30, F01D 7/00, F02K 3/065

(54) **Turbopropulseur comportant un ensemble de pales à orientation reglable**
Turbopropellertriebwerk, das einen Satz verstellbarer Propeller umfasst
Turbo-propeller comprising an assembly of blades with adjustable orientation.

(30) Priorité: 09.11.2006 FR 0654797
(43) Date de publication de la demande: 14.05.2008
(73) Titulaire: SNECMA, 75015 Paris (FR)
(72) Inventeur: Gallet, François, 75012 Paris (FR)
(74) Mandataire: Intès, Didier Gérard André

(56) Documents cités:
- EP-A- 0 155 073
- EP-A1- 0 137 873
- EP-A1- 1 306 558
- FR-A1- 2 250 077
- GB-A- 2 077 855
- US-A1- 2006 188 375

## Description

L'invention se rapporte à un turbopropulseur comportant au moins un ensemble de pales à orientation réglable, commandé, l'orientation réglable des pales constituant l'un des paramètres permettant de gérer la poussée du turbopropulseur. L'invention concerne plus particulièrement la commande d'orientation de ces pales.

Le brevet EP 1 306 558 A divulgue un turbopropulseur selon le préambule de la revendication 1.

On connaît, par exemple du brevet US 4 621 978, un turbopropulseur à double hélice comprenant une turbine à deux rotors contrarotatifs entraînant respectivement deux ensembles de pales à orientation réglable. L'invention s'applique notamment à ce type de turbopropulseur d'avion. Par ailleurs, différents mécanismes de commande d'orientation des pales sont connus. Par exemple, un système connu comporte un vérin classique, agencé axialement dans l'espace intérieur ménagé au centre de la turbine à veine annulaire. Des liaisons mécaniques transmettent le mouvement de la tige du vérin radialement jusqu'aux pales à orientation réglable.

Ces éléments de liaison sont complexes, encombrants, lourds et coûteux. De plus, les efforts à transmettre sont importants, ce qui nécessite des pressions d'actionnement élevées pour le vérin, compte tenu de la surface nécessairement limitée du piston de ce vérin. Cette pression de commande élevée est préjudiciable à la longévité du vérin. Si les deux ensembles de pales sont à orientation réglable, le vérin est généralement commun aux deux ensembles.

La maintenance est compliquée car les éléments vitaux sont situés à l'intérieur du carter et plus particulièrement, pour certains, à l'intérieur de la turbine. On ne peut les changer sans avoir à démonter la turbine.

L'invention vise à surmonter tous ces inconvénients.

Plus particulièrement, l'invention concerne un turbopropulseur comportant au moins un ensemble de pales à orientation réglable, commandé, solidaire en rotation d'un carter tournant mécaniquement lié à un rotor de turbine, caractérisé en ce que chaque pale dudit ensemble est couplée, pour le réglage de son orientation, à un organe d'actionnement d'un vérin annulaire porté par ledit carter tournant, ledit vérin étant commun aux pales dudit ensemble.

Il résulte de la définition qui précède que le vérin annulaire situé à l'extérieur, à la base et à proximité immédiate de l'ensemble des pales qu'il a pour fonction de manoeuvrer, est beaucoup plus léger et facile à entretenir. Le vérin est accessible car situé à l'extérieur du turbopropulseur, plus particulièrement fixé sur le carter tournant.

La surface du piston annulaire est importante, ce qui permet une commande de l'orientation des pales sous des pressions beaucoup plus faibles. Enfin, on peut prévoir un vérin annulaire pour chaque ensemble de pales, ce qui procure un degré de liberté supplémentaire pour gérer la poussée du turbopropulseur.

Selon un mode de réalisation possible, ledit vérin annulaire comporte un corps à deux parois cylindriques coaxiales et deux parois d'extrémités annulaires. Le corps abrite un piston annulaire mobile entre les deux parois d'extrémités. Ce piston est solidaire de l'organe d'actionnement précité.

Selon une possibilité, ledit organe d'actionnement comporte un élément tubulaire cylindrique coaxial fixé au piston et traversant avec un coulissement étanche une ouverture annulaire pratiquée dans l'une des parois d'extrémités du vérin.

Selon une autre possibilité, ledit organe d'actionnement comporte une pluralité de tiges fixées au piston, chacune traversant avec un coulissement étanche une ouverture cylindrique pratiquée dans une paroi d'extrémité annulaire du vérin.

Chaque pale est montée pivotante sur ledit carter tournant. La pale pivote autour d'un axe perpendiculaire à l'axe de rotation de la turbine et comporte à sa base, un bras de manoeuvre articulé par son extrémité audit organe d'actionnement du vérin.

L'invention concerne avantageusement un turbopropulseur selon la définition qui précède, caractérisé en ce qu'il comporte une turbine à deux rotors contrarotatifs et deux ensembles de pales à orientation réglable, solidaires en rotation de deux carters tournants respectivement liés auxdits rotor, chaque ensemble étant actionné par un vérin annulaire porté par le carter tournant correspondant.

L'invention sera mieux comprise et d'autres avantages de celle-ci apparaîtront plus clairement à la lumière de la description qui va suivre d'un turbopropulseur conforme à son principe, donnée uniquement à titre d'exemples et faite en référence aux dessins annexés, sur lesquels :
- la figure 1 est une vue générale en perspective du turbopropulseur conforme à l'invention ;
- la figure 2 est une vue schématique partielle en coupe du turbopropulseur ;
- la figure 3 est une vue de détail, en perspective et en coupe des moyens de commande des pales ; et
- la figure 4 est une vue de détail illustrant une variante du vérin.

Sur les dessins, on a représenté un turbopropulseur 11 comportant, selon l'exemple, deux ensembles 13a, 13b de pales 14 à orientation réglable. Les pales 14 de chaque ensemble 13a, 13b sont montées sur un carter tournant 16a, 16b en forme de plateforme annulaire, lui-même monté en rotation à la surface d'un carter fixe 18. Les pales 14 de chaque ensemble sont régulièrement espacées, circonférentiellement et orientées globalement radialement, à la surface du carter tournant. Le carter fixe et les carters tournants ont un axe commun X. Le carter fixe 18 abrite une chambre de combustion et une turbine 20 à deux rotors contrarotatifs 22a, 22b. Chaque rotor porte et entraîne en rotation l'un des carters tournants 16a, 16b sur lequel est monté un ensemble 13a, 13b de pales à orientation réglable précitée. Un tel ensemble de pales est commandé pour le réglage de l'orientation desdites pales, en vue de gérer la poussée du turbopropulseur. La structure décrite jusqu'à présent est comparable, fonctionnellement, à celle qui est décrite dans le brevet US 4 621 978 et ses aspects connus ne seront pas décrits plus en détail.

L'invention porte principalement sur les moyens de commande d'orientation des pales du ou chaque ensemble.

Selon une caractéristique importante, chaque pale 14 d'un tel ensemble 13a ou 13b est couplée, pour le réglage de son orientation, à un organe d'actionnement 25 d'un vérin annulaire 27a, 27b porté par ledit carter tournant 16a, 16b correspondant. Ce vérin est commun aux pales dudit ensemble.

Plus particulièrement, chaque pale 14 d'un ensemble 13a, 13b est montée pivotante sur le carter tournant 27a, 27b correspondant, autour d'un axe perpendiculaire à l'axe de rotation X de la turbine et comporte à sa base un bras de manoeuvre 30 terminé par une rotule 31. Cette rotule est articulée à l'organe d'actionnement 25 du vérin 27a ou 27b.

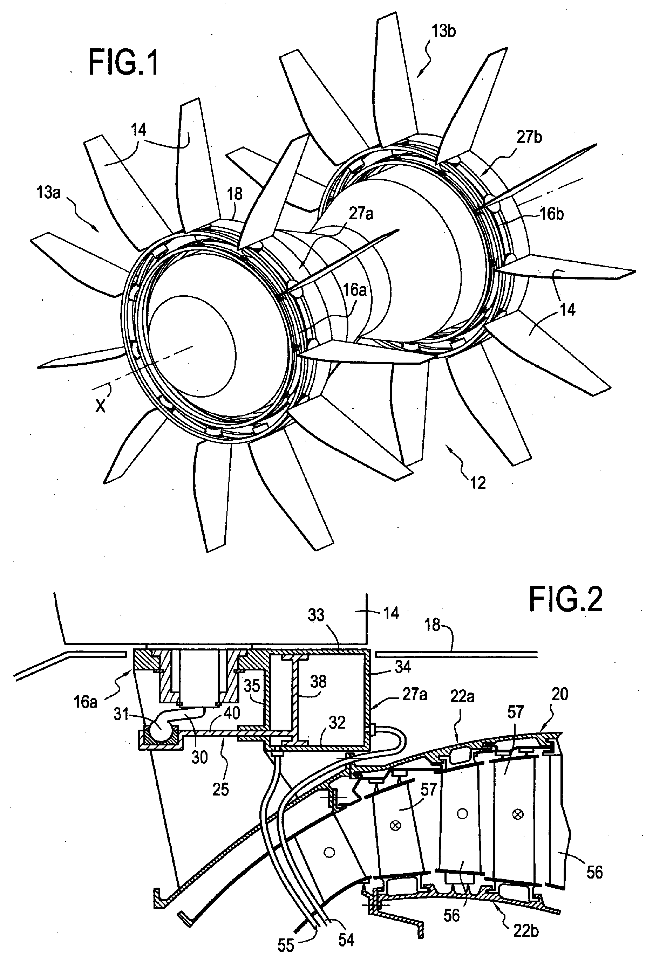

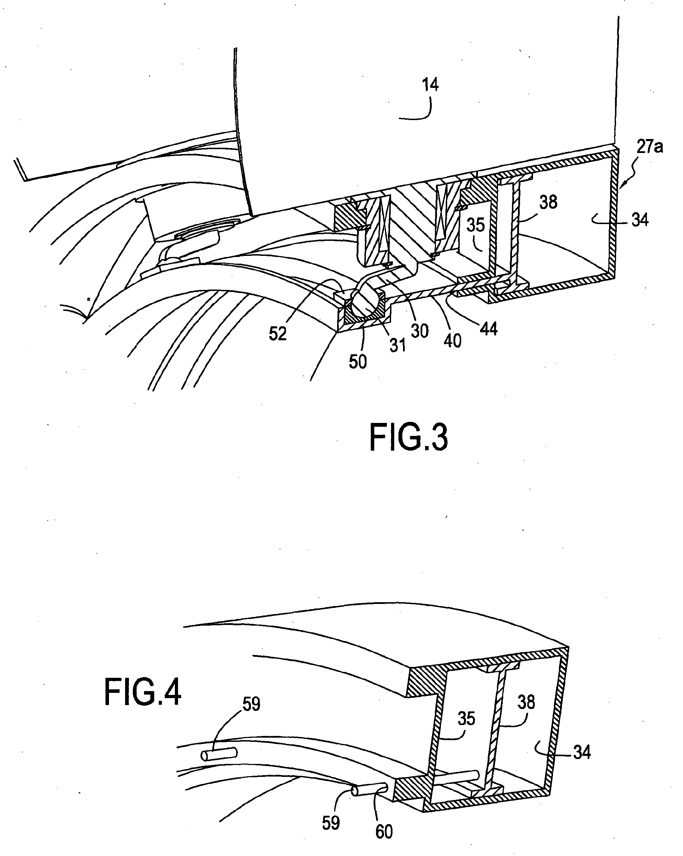

Par ailleurs, le vérin annulaire 27a ou 27b comporte un corps à deux parois cylindriques 32, 33 coaxiales et deux parois d'extrémités 34, 35 annulaires. Ce corps abrite un piston annulaire 38 mobile entre les deux parois d'extrémités. Le piston est solidaire de l'organe d'actionnement 25. Dans l'exemple des figures 2 et 3, l'organe d'actionnement 25 comprend un élément tubulaire cylindrique 40 coaxial, fixé par une extrémité au piston 38 et traversant avec coulissement étanche une ouverture annulaire 44 pratiquée dans la paroi d'extrémité 35 du vérin. Cette paroi d'extrémité 35 est proche des pales et l'élément tubulaire 40 est couplé à l'ensemble des rotules 31 de tous les bras de manoeuvre 30 des pales 14.

Plus particulièrement, ledit organe d'actionnement 25 comporte à son extrémité une gorge annulaire 50 coaxiale abritant des réceptacles 52. Ces réceptacles 52 peuvent coulisser dans la gorge 50, de façon à permettre tout mouvement relatif nécessaire entre le doigt 30 et la gorge 50. Chaque réceptacle a une surface intérieure sphérique. Les rotules 31 s'articulent dans des réceptacles 52 correspondants. En conséquence, un déplacement rectiligne de l'organe d'actionnement se traduit par un changement d'orientation uniforme et simultané de toutes les pales 14 dudit ensemble 13a ou 13b.

Les deux chambres du vérin séparées par le piston sont alimentées en fluide d'actionnement par deux conduits 54, 55 traversant le rotor correspondant de la turbine et qui rejoignent le stator de cette turbine au voisinage de l'axe du turbopropulseur où sont agencées des chambres annulaires de distribution de fluide d'actionnement, à joints tournants étanches, d'un type connu. Le fluide d'actionnement est, selon l'exemple, de l'huile.

Sur la figure 2, on distingue que le carter tournant 16a de l'ensemble de pales situé à l'avant du turbopropulseur est porté par le rotor 22a présentant un carter extérieur et des aubes 56 dirigées radialement vers l'intérieur. On comprend que l'autre carter tournant 16b est solidaire de l'autre rotor 22b comprenant un carter intérieur et portant des aubes 57 dirigées radialement vers l'extérieur. Ainsi, la turbine à deux rotors contrarotatifs est associée aux deux ensembles de pales à orientation réglable solidaires en rotation des deux carters tournants décalés axialement et respectivement liés aux rotors. Chaque ensemble de pales est actionné par un vérin annulaire 27a, 27b propre, porté par le carter tournant 16a, 16b correspondant.

Selon la variante de la figure 4, l'organe d'actionnement comporte une pluralité de tiges 59 fixées au piston 38. Chaque tige traverse avec coulissement étanche une ouverture cylindrique 60 pratiquée dans la paroi d'extrémité annulaire 35 précitée. Les tiges sont régulièrement réparties circonférentiellement. Elles peuvent être reliées à une gorge annulaire coaxiale du même type que celui de la figure 2. On peut aussi envisager que le nombre de tiges soit égal au nombre de pales et que chaque tige 59 se termine par un réceptacle dans lequel s'articule la rotule de l'une des pales.

## Revendications

1. Turbopropulseur comportant au moins un ensemble (13a, 13b) de pales (14) à orientation réglable, commandé, solidaire en rotation d'un carter tournant (16a, 16b), en forme de plateforme annulaire, mécaniquement lié à un rotor de turbine (22a, 22b), le carter tournant (16a, 16b) étant monté en rotation à la surface d'un carter fixe 18, **caractérisé en ce que** chaque pale (14) dudit ensemble est couplée, pour le réglage de son orientation, à un organe d'actionnement (25, 59) d'un vérin annulaire (27a, 27b) porté par ledit carter tournant, ledit vérin étant commun aux pales dudit ensemble.

2. Turbopropulseur selon la revendication 1, **caractérisé en ce que** ledit vérin annulaire comporte un corps à deux parois cylindriques (32, 33) coaxiales et deux parois d'extrémité (34, 35) annulaires et **en ce que** ledit corps abrite un piston annulaire (38) mobile entre les deux parois d'extrémités, ledit piston étant solidaire de l'organe d'actionnement précité.

3. Turbopropulseur selon la revendication 1 ou 2, **caractérisé en ce que** chaque pale (14) est montée pivotante sur ledit carter tournant, autour d'un axe perpendiculaire à l'axe de rotation de ladite turbine et **en ce qu'**elle comporte à sa base un bras de manoeuvre (30) articulé par son extrémité audit organe d'actionnement du vérin.

4. Turbopropulseur selon la revendication 2 ou 3, **caractérisé en ce que** ledit organe d'actionnement (25) comprend un élément tubulaire (40) cylindrique coaxial, fixé au piston et traversant avec un coulissement étanche une ouverture annulaire pratiquée dans une paroi d'extrémité précitée dudit vérin.

5. Turbopropulseur selon la revendication 2 ou 3, **caractérisé en ce que** ledit organe d'actionnement comporte une pluralité de tiges (59) fixées au piston, chacune traversant avec un coulissement étanche une ouverture cylindrique (66) pratiquée dans une paroi d'extrémité annulaire précitée.

6. Turbopropulseur selon l'une des revendications 2 à 5, **caractérisé en ce que** ledit organe d'actionnement (25) comporte à son extrémité une gorge annulaire (50) coaxiale abritant des réceptacles dans lesquels s'articulent des rotules (31) formant les extrémités des bras de manoeuvre desdites pales, respectivement.

7. Turbopropulseur selon l'une des revendications précédentes, **caractérisé en ce qu'**il comporte une turbine (20) à deux rotors contrarotatifs (22a, 22b) et deux ensembles (13a, 13b) de pales à orientation réglable, solidaires en rotation de deux carters tournants respectivement liés auxdits rotor, chaque ensemble étant actionné par un vérin annulaire (27a, 27b) porté par le carter tournant (16a, 16b) correspondant.

## Patentansprüche

1. Turboprop-Triebwerk, umfassend wenigstens eine gesteuerte Anordnung (13a, 13b) von Schaufeln (14) mit einstellbarer Ausrichtung, die mit einem rotierenden Gehäuse (16a, 16b) in Form einer ringförmigen Plattform, das mit einem Turbinenrotor (22a, 22b) mechanisch verbunden ist, drehfest verbunden ist, wobei das rotierende Gehäuse (16a, 16b) an der Oberfläche eines festen Gehäuses (18) drehbar angebracht ist, **dadurch gekennzeichnet, dass** jede Schaufel (14) der Anordnung für die Einstellung ihrer Ausrichtung mit einem Betätigungsorgan (25, 59) eines durch das rotierende Gehäuse getragenen ringförmigen Zylinders (27a, 27b) gekoppelt ist, wobei der Zylinder den Schaufeln der Anordnung gemein ist.

2. Turboprop-Triebwerk nach Anspruch 1, **dadurch gekennzeichnet, dass** der ringförmige Zylinder einen Körper mit zwei koaxialen zylindrischen Wänden (32, 33) und zwei ringförmigen Endwänden (34, 35) umfasst und dass in dem Körper ein ringförmiger Kolben (38), welcher zwischen den beiden Endwänden beweglich ist, aufgenommen ist, wobei der Kolben mit dem vorgenannten Betätigungsorgan fest verbunden ist.

3. Turboprop-Triebwerk nach Anspruch 1 oder 2, **dadurch gekennzeichnet, dass** jede Schaufel (14) um eine zu der Rotationsachse der Turbine senkrecht verlaufende Achse an dem rotierenden Gehäuse drehbar angebracht ist und dass sie an ihrer Basis einen Betätigungsarm (30) umfasst, der mit seinem Ende an dem Betätigungsorgan des Zylinders angelenkt ist.

4. Turboprop-Triebwerk nach Anspruch 2 oder 3, **dadurch gekennzeichnet, dass** das Betätigungsorgan (25) ein zylindrisches, koaxiales rohrförmiges Element (40) umfasst, das an dem Kolben befestigt ist und das eine ringförmige Öffnung, welche in einer vorgenannten Endwand des Zylinders ausgebildet ist, mit einer dichten Gleitbewegung durchgreift.

5. Turboprop-Triebwerk nach Anspruch 2 oder 3, **dadurch gekennzeichnet, dass** das Betätigungsorgan eine Vielzahl von Stangen (59), die an dem Kolben befestigt sind, umfasst, wobei jede eine zylindrische Öffnung (66), welche in einer vorgenannten ringförmigen Endwand ausgebildet ist, mit einer dichten Gleitbewegung durchgreift.

6. Turboprop-Triebwerk nach einem der Ansprüche 2 bis 5, **dadurch gekennzeichnet, dass** das Betätigungsorgan (25) an seinem Ende eine koaxiale Ringnut (50) umfasst, in der Aufnahmen untergebracht sind, in denen Kugelköpfe (31), die jeweils die Enden der Betätigungsarme der Schaufeln bilden, gelenkig lagern.

7. Turboprop-Triebwerk nach einem der vorhergehenden Ansprüche, **dadurch gekennzeichnet, dass** es eine Turbine (20) mit zwei gegenläufigen Rotoren (22a, 22b) sowie zwei Anordnungen (13a, 13b) von Schaufeln mit einstellbarer Ausrichtung, die mit zwei rotierenden Gehäusen, welche jeweils mit den Rotoren verbunden sind, drehfest verbunden sind, umfasst, wobei jede Anordnung über einen durch das entsprechende rotierende Gehäuse (16a, 16b) getragenen ringförmigen Zylinder (27a, 27b) betätigt wird.

## Claims

1. A turboprop including at least one set (13a, 13b) of controlled adjustable-pitch blades (14) constrained to rotate with a rotary casing (16a, 16b),in the form of an annular platform, mechanically connected to a turbine rotor (22a, 22b), the rotary casing (16a, 16b) being mounted to rotate on the surface of a stationary casing (18), **characterized in that** each blade (14) of said set is coupled, to adjust its orientation, to a control member (25, 59) of an annular actuator (27a, 27b) carried by said rotary casing, said actuator being common to the blades of said set.

2. A turboprop according to claim 1, **characterized in that** said annular actuator comprises a body having two coaxial cylindrical walls (32, 33), and two annular end walls (34, 35), and wherein said body houses an annular piston (38) movable between the two end walls, said piston being secured to the above-mentioned control member.

3. A turboprop according to claim 1 or 2, **characterized in that** each blade (14) is mounted on said rotary casing to pivot about an axis perpendicular to the axis of rotation of said turbine, and **in that** each blade includes at its base a crank arm (30) hinged at its end to said control member of the actuator.

4. A turboprop according to claim 2 or 3, **characterized in that** said control member (25) comprises a cylindrical tubular element (40) about the axis, secured to the piston and passing slidably in leaktight manner through an annular opening formed in an above-mentioned end wall of said actuator.

5. A turboprop according to claim 2 or 3, **characterized in that** said control member comprises a plurality of rods (59) fastened to the piston, each rod passing slidably and in leaktight manner through a respective cylindrical opening (66) formed in an above-mentioned annular end wall.

6. A turboprop according to any one of claims 2 to 5, **characterized in that** said control member (25) includes, at its end, an annular groove (50) about the axis housing receptacles in which balls (31) forming the ends of the above-mentioned blade crank arms are hinged, respectively.

7. A turboprop according to any one of the preceding claims, **characterized in that** it comprises a turbine (20) having two contrarotating rotors (22a, 22b) and two sets (13a, 13b) of adjustable-pitch blades that are constrained to rotate with two rotary casings that are connected to respective ones of said rotors, each set being actuated by an annular actuator (27a, 27b) carried by the corresponding rotary casing (16a, 16b).
